(19) **Europäisches Patentamt European Patent Office Office européen des brevets**

(11) **EP 3 783 701 B1**

(12) **EUROPEAN PATENT SPECIFICATION**

(45) Date of publication and mention of the grant of the patent:
**21.02.2024 Bulletin 2024/08**

(21) Application number: **20190695.5**

(22) Date of filing: **12.08.2020**

(51) International Patent Classification (IPC):
*H01M 4/13* (2010.01)          *H01M 10/0525* (2010.01)
*H01M 10/42* (2006.01)          *H01M 4/02* (2006.01)

(52) Cooperative Patent Classification (CPC):
**H01M 4/13; H01M 10/0525; H01M 10/4285;**
H01M 2004/021; Y02E 60/10

(54) **ELECTRODE FOR SECONDARY BATTERY AND LITHIUM SECONDARY BATTERY COMPRISING THE SAME**

ELEKTRODE FÜR SEKUNDÄRBATTERIE UND LITHIUMSEKUNDÄRBATTERIE DAMIT

ÉLECTRODE POUR BATTERIE SECONDAIRE ET BATTERIE SECONDAIRE AU LITHIUM L'INCLUANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.08.2019  KR 20190101343**
**05.08.2020  KR 20200098150**

(43) Date of publication of application:
**24.02.2021  Bulletin 2021/08**

(73) Proprietor: **LG Energy Solution, Ltd.**
**Seoul 07335 (KR)**

(72) Inventors:
• **SONG, In Young**
 **34122 Daejeon (KR)**
• **BAEK, Joo Yul**
 **34122 Daejeon (KR)**
• **LEE, Jeong Kyu**
 **34122 Daejeon (KR)**
• **OH, Sung Joon**
 **34122 Daejeon (KR)**
• **LEE, Jong Chan**
 **34122 Daejeon (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**US-A1- 2016 163 812**

• **BONGKI SON ET AL: "Measurement and Analysis of Adhesion Property of Lithium-Ion Battery Electrodes with SAICAS", ACS APPLIED MATERIALS & INTERFACES, vol. 6, no. 1, 8 January 2014 (2014-01-08) , pages 526-531, XP055359994, US ISSN: 1944-8244, DOI: 10.1021/am404580f**

**Description**

**BACKGROUND OF THE INVENTION**

**Field of the Invention**

The present invention relates to an electrode for a secondary battery and a lithium secondary battery including the same.

**Description of the Related Art**

Recently, with the rapid spread of electronic devices using batteries, such as mobile phones, notebook computers, and electric vehicles, demand for secondary batteries with relatively high capacity as well as small size and lightweight has been rapidly increased. Particularly, since a lithium secondary battery is lightweight and has high energy density, the lithium secondary battery is in the spotlight as a driving power source for portable devices. Accordingly, research and development efforts for improving performance of the lithium secondary battery have been actively conducted.

In the lithium secondary battery in a state in which an organic electrolyte solution or a polymer electrolyte solution is filled between a positive electrode and a negative electrode which respectively include active materials capable of intercalating and deintercalating lithium ions, electrical energy is produced by oxidation and reduction reactions when the lithium ions are intercalated/deintercalated into/from the positive electrode and the negative electrode.

With respect to the electrode active material, a conductive agent, and a current collector which constitute the electrode of the lithium secondary battery, bonding forces between the components of the electrode may be increased by a polymer binder, and an exfoliation phenomenon of the electrode may be suppressed during coating, drying, and rolling processes of the electrode. Also, output characteristics may be improved by increasing electrical conductivity through the conductive agent.

However, it is desirable that an amount of the polymer binder having insulator properties in a limited space of the electrode is minimized to increase capacity of the electrode. However, if the amount of the polymer binder is decreased, a cohesive failure phenomenon may occur due to a decrease in binding force. Cohesive failure is a phenomenon in which crack or exfoliation occurs in an electrode material mixture layer because cohesion between binder (adhesive) molecules is lost due to particle breakage or tearing between particle-binder-particle when stress is applied to the electrode due to expansion/contraction during charge and discharge cycles, external impact, etc., wherein battery performance is degraded when the cohesive failure occurs. Also, the binder may be non-uniformly distributed according to process conditions, and, in this case, the cohesive failure may also be caused.

Furthermore, with respect to a multilayer electrode in which electrode active materials, which are respectively advantageous in battery life characteristics, capacity, and strength characteristics, are configured in multi-layers, cohesive failure between electrode layers may occur due to differences in adhesion and strengths of the different electrode active materials, and, accordingly, the life characteristics may be degraded.

Particularly, with respect to a multilayer electrode in which artificial graphite having excellent life characteristics and capacity characteristics and natural graphite having excellent strength and adhesion are formed in multi-layers, it is advantageous for cost reduction while battery characteristics are improved, but cohesive failure, particularly, interlayer cohesive failure in the electrode may occur due to differences in adhesion and strengths between the artificial graphite and the natural graphite, and, accordingly, the life characteristics may be degraded.

**Prior Art Document**

**Patent Document**

(Patent Document 1) U.S. Patent Publication No. 2014-0295248

BONGKI SON et al. ACS APPLIED MATERIALS & INTERFACES, vol. 6, no. 1, 8 January 2014 (2014-01-08), pages 526-531, discloses Measurement and Analysis of Adhesion Property of Lithium-Ion Battery Electrodes with SAICAS.

US 2016/163812 A1 discloses a semiconductor device including a semiconductor substrate and an electrode formed from an alloy containing aluminum, silicon and titanium. The silicon content in the electrode is from 0.5 to 1.0% by weight relative to the total weight of the electrode, the titanium content in the electrode is from 0.8 to 3.0% by weight relative to the total weight of the electrode, and the thickness of the electrode is at least 1 $\mu$m.

## SUMMARY OF THE INVENTION

An aspect of the present invention provides an electrode for a secondary battery which suppresses the occurrence of cohesive failure, particularly, interlayer cohesive failure in the electrode during operation of the lithium secondary battery and has excellent life characteristics and capacity characteristics while having cost competitiveness.

According to an aspect of the present invention, there is provided an electrode for a secondary battery including a current collector and at least one electrode material mixture layer on a surface of the current collector, the at least one electrode material mixture layer including a negative electrode active material, a conductive agent, and a binder, wherein the electrode has a property such that in a regression curve obtained by regression analysis of shear strength data according to a cutting depth which are measured while obliquely cutting the electrode material mixture layer from a surface thereof until reaching the current collector using a surface and interfacial cutting analysis system (SAICAS), a ratio of a maximum value ($\sigma_{max}$) to a minimum value ($\sigma_{min}$) of shear strength is 1.7 or less.

According to another aspect of the present invention, there is provided a lithium secondary battery including the electrode for a secondary battery.

## BRIEF DESCRIPTION OF THE DRAWINGS

The following drawings attached to the specification illustrate preferred examples of the present invention by example, and serve to enable technical concepts of the present invention to be further understood together with detailed description of the invention given below, and therefore the present invention should not be interpreted only with matters in such drawings.

FIG. 1 is a schematic view illustrating a process of cutting an electrode material mixture layer using a surface and interfacial cutting analysis system;

FIG. 2 is a graph illustrating shear strength data and a regression curve of an electrode according to Example 1;

FIG. 3 is a graph illustrating shear strength data and a regression curve of an electrode according to Example 2;

FIG. 4 is a graph illustrating shear strength data and a regression curve of an electrode according to Example 3;

FIG. 5 is a graph illustrating shear strength data and a regression curve of an electrode according to Comparative Example 1;

FIG. 6 is a graph illustrating shear strength data and a regression curve of an electrode according to Comparative Example 2; and

FIG. 7 is a graph illustrating shear strength data and a regression curve of an electrode according to Comparative Example 3.

## DETAILED DESCRIPTION OF THE PREFERRED EMBODIMENT

Hereinafter, the present invention will be described in more detail to allow for a clearer understanding of the present invention. In this case, it will be understood that words or terms used in the specification and claims shall not be interpreted as the meaning defined in commonly used dictionaries, and it will be further understood that words or terms used in the specification and claims should be interpreted as having a meaning that is consistent with their meaning in the context of the relevant art and the technical idea of the invention, based on the principle that an inventor may properly define the meaning of the words or terms to best explain the invention.

An electrode for a secondary battery of the present invention is an electrode including a current collector and at least one electrode material mixture layer on a surface of the current collector, the at least one electrode material mixture layer including a negative electrode active material, a conductive agent, and a binder, wherein the electrode has a property such that in a regression curve obtained by regression analysis of shear strength data according to a cutting depth which are measured while obliquely cutting the electrode material mixture layer from a surface thereof until reaching the current collector using a surface and interfacial cutting analysis system, a ratio of a maximum value ($\sigma_{max}$) to a minimum value ($\sigma_{min}$) of shear strength is 1.7 or less, preferably 1 to 1.7, and more preferably 1 to 1.6, for example, 1.2 to 1.6.

The electrode for a secondary battery of the present invention may be a negative electrode, and, specifically, may be an electrode with a structure in which an electrode material mixture layer is formed on a current collector. The electrode material mixture layer may include a negative electrode active material, a conductive agent, and a binder.

The electrode material mixture layer may be a single layer, or may be a multilayer-structured electrode including a first electrode material mixture layer and a second electrode material mixture layer formed on the first electrode material mixture layer. For example, the electrode material mixture layer may include a first electrode material mixture layer on a surface of the current collector and including a first negative electrode active material, a first conductive agent, and a first binder, and a second electrode material mixture layer on a surface of the first electrode material mixture layer opposite the current collector and including a second negative electrode active material, a second conductive agent, and a second binder.

The first and second negative electrode active materials, the first and second conductive agents, and the first and second binders, which are included in the first electrode material mixture layer and the second electrode material mixture layer, respectively, may be the same or may be different from each other.

The current collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 pm to 500 $\mu$m, and, similar to a positive electrode collector, microscopic irregularities may be formed on the surface of the collector to improve the adhesion of the negative electrode active material. The current collector, for example, may be used in various shapes such as that of a film, a sheet, a foil, a net, a porous body, a foam body, a non-woven fabric body, and the like.

The negative electrode active material may be a negative electrode active material commonly used in the art, for example, a carbonaceous material such as natural graphite, artificial graphite, graphitized carbon fibers, and amorphous carbon; a metallic compound alloy able with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as $SiO_\beta(0 < \beta < 2)$, $SnO_2$, vanadium oxide, and lithium vanadium oxide; or a composite including the metallic compound and the carbonaceous material such as a Si-C composite or a Sn-C composite.

In a case in which the electrode material mixture layer has a multilayer structure of two or more layers, the first negative electrode active material and the second negative electrode active material may each include at least one selected from the group consisting of natural graphite and artificial graphite, and may selectively further include a carbonaceous material such as graphitized carbon fibers and amorphous carbon; a metallic compound alloy able with lithium such as Si, Al, Sn, Pb, Zn, Bi, In, Mg, Ga, Cd, a Si alloy, a Sn alloy, or an Al alloy; a metal oxide which may be doped and undoped with lithium such as $SiO_\beta(0 < \beta < 2)$, $SnO_2$, vanadium oxide, and lithium vanadium oxide; or a composite including the metallic compound and the carbonaceous material such as a Si-C composite or a Sn-C composite.

Preferably, the first negative electrode active material included in the first electrode material mixture layer, as a lower portion of the electrode, may include natural graphite having excellent strength and adhesion, and the second negative electrode active material included in the second electrode material mixture layer, as an upper portion of the electrode, may include artificial graphite having excellent life characteristics and capacity.

The conductive agent, the first conductive agent, and the second conductive agent are used to provide conductivity to the electrode, wherein any conductive agent may be used without particular limitation as long as it has suitable electron conductivity without causing adverse chemical changes in the battery. Specific examples thereof may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be typically included in an amount of 1 wt% to 30 wt% based on a total weight of the electrode material mixture layer.

The binder, the first binder, and the second binder improve the adhesion between negative electrode active material particles and the adhesion between the negative electrode active material and the current collector. Specific examples thereof may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated EPDM, a styrene-butadiene rubber (SBR), a fluorine rubber, or various copolymers thereof, and any one thereof or a mixture of two or more thereof may be used. The binder may be included in an amount of 1 wt% to 30 wt% based on the total weight of the electrode material mixture layer.

The electrode material mixture layer, for example, may be prepared by coating the current collector with a composition for forming an electrode, which includes the negative electrode active material, the binder, and the conductive agent, and drying the coated current collector, or may be prepared by casting the composition for forming an electrode on a separate support and then laminating a film separated from the support on the current collector.

Also, as another method, the electrode may be prepared by casting the composition for forming an electrode material mixture layer on a separate support and then laminating a film separated from the support on the positive electrode collector.

With respect to the electrode for a secondary battery according to the present invention, a ratio of a maximum value ($\sigma_{max}$) to a minimum value ($\sigma_{min}$) of shear strength in a regression curve obtained by a shear strength analysis method to be described later is 1.7 or less.

According to the study of the present inventors, in a case in which the maximum value to the minimum value of the shear strength in the regression curve obtained by the shear strength analysis method satisfies the above ratio, cohesive failure in the electrode material mixture layer is less, and, accordingly, excellent life characteristics are exhibited when the electrode is used in a secondary battery.

Particularly, with respect to a multilayer electrode, cohesive failure, particularly, interlayer cohesive failure in the electrode may be intensified due to differences in adhesion and strengths of different electrode active materials, and, accordingly, life characteristics may be degraded when the multilayer electrode is used in a secondary battery. However, the multilayer electrode for a secondary battery of the present invention, in which the ratio of the maximum value ($\sigma_{max}$) to the minimum value ($\sigma_{min}$) of the shear strength in the regression curve obtained by the following shear strength analysis method satisfies 1.7 or less, may exhibit excellent lifetime characteristics and capacity characteristics due to significantly less cohesive failure, particularly, less interlayer cohesive failure in the electrode material mixture layer during operation of the secondary battery.

The shear strength analysis method of the present invention is performed in such a manner that, after shear strength ($\sigma$) data according to a cutting depth are obtained while cutting the electrode material mixture layer from a surface thereof until reaching the current collector using a surface and interfacial cutting analysis system (SAICAS) and a regression analysis is performed on the shear strength ($\sigma$) data to obtained a regression curve, a ratio of a maximum value to a minimum value of shear strength in the regression curve is compared.

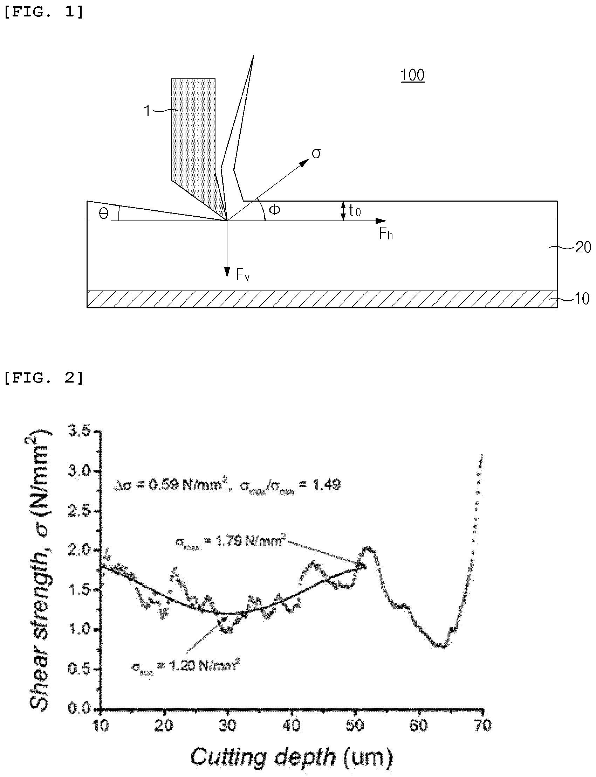

The surface and interfacial cutting analysis system (SAICAS) includes a device for obliquely cutting a coated thin film sample from a surface thereof to an interface using a blade, wherein it is a system that may measure a force applied to the blade during a cutting process. FIG. 1 is a view illustrating a process of cutting an electrode material mixture layer using the surface and interfacial cutting analysis system (SAICAS). As illustrated in FIG. 1, a blade 1 obliquely cuts an electrode material mixture layer 20 formed on a current collector 10 at a specific cutting angle $\theta$ with respect to a surface. In a case in which the cutting is performed with a cutting angle as described above, cutting is performed while the blade descends diagonally in a depth direction of the electrode material mixture layer. The cutting of the electrode material mixture layer is performed until the blade reaches the current collector.

In this case, the cutting angle $\theta$ may be in a range of greater than 0° to 10° or less, preferably 1° to 5.7°, and more preferably 3° to 5.7°. Since the cutting angle $\theta$ is set within the above range, measurement time may not only be shortened, but accuracy of the shear strength data may also be improved.

Also, a running speed of the blade during the cutting of the electrode material mixture layer may be in a range of about 0.01 $\mu$m/s to about 10 $\mu$m/s in a horizontal direction and about 0.001 $\mu$m/s to about 1 $\mu$m/s in a vertical direction. Preferably, the running speed of the blade may be in a range of 0.1 $\mu$m/s to 1 $\mu$m/s in the horizontal direction and 0.01 $\mu$m/s to 0.1 um/s in the vertical direction, and may be more preferably in a range of 0.1 $\mu$m/s to 0.5 um/s in the horizontal direction and 0.01 $\mu$m/s to 0.05 $\mu$m/s in the vertical direction. Since resolution of the shear strength data is improved by adjusting the running speed of the blade within the above range, the accuracy of the data is improved.

The blade is not particularly limited as long as it has a hardness higher than the electrode material mixture layer and its shape is not deformed in a cutting process, and, for example, the blade may be formed of a material, such as diamond, cubic boron nitride (BN), steel, cermet, and ceramic, and may more preferably be formed of cubic boron nitride (BN).

The blade, for example, may have a width of 0.1 mm to 4 mm, for example, 0.3 mm to 1 mm.

If the surface and interfacial cutting analysis system (SAICAS) is used, a horizontal force $F_h$ and a vertical force $F_v$, which are applied to the blade in the cutting process, may be measured. Thus, the horizontal force $F_h$ and the vertical force $F_v$, which are applied to the blade according to a cutting depth $t_0$, are measured using the surface and interfacial cutting analysis system (SAICAS), and shear strength ($\sigma$) data according to the cutting depth may be obtained by using the measured values.

Specifically, the shear strength ($\sigma$) may be calculated by the following Equation 1.

[Equation 1]

$$\sigma = \frac{F_h \cos\theta \sin\theta - F_v \sin^2\theta}{bt_0}$$

In Equation 1, $\sigma$ is the shear strength (N/mm$^2$), $F_h$ is the horizontal force (N) applied to the blade which is measured by the surface and interfacial cutting analysis system, $F_v$ is the vertical force (N) applied to the blade which is measured by the surface and interfacial cutting analysis system, $\theta$ is the cutting angle (°), b is the blade width (mm), and $t_0$ is the cutting depth ($\mu$m).

After obtaining the shear strength data according to the cutting depth by the above processes, a regression analysis is performed on the shear strength data to obtain a regression curve. Fluctuation due to deformation of electrode particles exists in the shear strength ($\sigma$) data previously obtained by Equation 1 using the surface and interfacial cutting analysis system (SAICAS). A minimum value and a maximum value in the shear strength ($\sigma$) data may be clearly and simply selected by simplifying the shear strength data through the regression analysis.

In this case, the regression curve may be obtained through polynomial regression, and, more specifically, may be obtained by using a fourth-order polynomial regression equation represented by Equation 2 below. In this case, x-axis of the regression curve represents the cutting depth, and y-axis represents the shear strength.

[Equation 2]

$$\sigma = A_0 + A_1 d + A_2 d^2 + A_3 d^3 + A_4 d^4$$

In Equation 2, $\sigma$ is the shear strength (N/mm$^2$),$A_0$, as shear strength when the cutting depth is 0 um, is a positive number, $A_1, A_2, A_3$, and $A_4$ are constants obtained by the polynomial fourth-order equation, and d is the cutting depth (um) .

No shear force is applied to the blade at an interface between the electrode material mixture layer and the current collector, and, as a result, the shear strength rapidly decreases. That is, a location where a shear strength value starts to decrease rapidly may be regarded as the interface between the electrode material mixture layer and the current collector. Since maximum and minimum value data of shear strength may be distorted when a shear strength value at the interface between the electrode material mixture layer and the current collector is included, it is desirable that a regression curve is obtained by excluding shear strength data of a section in which the shear strength value rapidly decreases.

Next, a minimum value ($\sigma_{min}$) and a maximum value ($\sigma_{max}$) of shear strength are obtained in the regression curve obtained as described above, and a ratio ($\sigma_{max}/\sigma_{min}$) of the maximum value to the minimum value is calculated.

In the electrode for a secondary battery of the present invention, the ratio of the maximum value ($\sigma_{max}$) to the minimum value ($\sigma_{min}$) of the shear strength, which has been obtained by the above-described processes, satisfies 1.7 or less. Preferably, the ratio of the maximum value ($\sigma_{max}$) to the minimum value ($\sigma_{min}$) of the shear strength may be in a range of 1 to 1.7, and may be more preferably in a range of 1 to 1.6, for example, 1.2 to 1.6. In a case in which the ratio of the maximum value ($\sigma_{max}$) to the minimum value ($\sigma_{min}$) of the shear strength is greater than 1.7, since the shear strength is non-uniform in a thickness direction of the electrode material mixture layer, cohesive failure easily occurs in the electrode material mixture layer when cycle repetition and external impact occur, and, as a result, the life characteristics may be rapidly degraded. Particularly, with respect to a multilayer electrode including two or more electrode material mixture layers with different compositions (components and/or contents), cohesive failure may be intensified at an interlayer interface due to differences in interlayer adhesion and strengths of the different electrode active materials. However, in a case in which an electrode satisfying the shear strength ratio of the present invention is used, since a variation in the shear strength in the thickness direction of the electrode material mixture layer is small, the cohesive failure in the electrode material mixture layer is minimized, and, as a result, excellent life characteristics may be obtained.

The ratio of the maximum value ($\sigma_{max}$) to the minimum value ($\sigma_{min}$) of the shear strength is determined by the collective action of factors, for example, types or contents of components (i.e., active material, conductive material, and binder) constituting the electrode material mixture layer, strength of the particles, a thickness of the electrode material mixture layer, porosity, and electrode preparation process conditions such as rolling and drying temperature, etc. Thus, an electrode having a desired shear strength ratio may be prepared by appropriately adjusting a composition of the electrode material mixture layer and/or electrode process conditions.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

## Example 1

Natural graphite as a first negative electrode active material, carbon black as a first conductive agent, and a carboxylmethyl cellulose (CMC) and a styrene butadiene rubber (SBR),as a first binder, were mixed in a weight ratio of 96.85:0.5:1.15:1.5ina distilled water solvent to prepare a composition for forming a first negative electrode material mixture layer (solid content 40 wt%).

Also, artificial graphite as a second negative electrode active material, carbon black as a second conductive agent, and a carboxylmethyl cellulose (CMC) and a styrenebutadiene rubber (SBR),as a second binder, were added at a weight ratio of 95.95:0.5:1.15:2.4 to distilled water and mixed to prepare a composition for forming a second negative electrode material mixture layer (solid content 40 wt%).

One surface of a copper current collector was coated with the composition for forming a first negative electrode material mixture layer and the composition for forming a second negative electrode material mixture layer, dried at 110°C for 2 minutes, and then rolled to prepare a negative electrode which was composed of the current collector, a first negative electrode material mixture layer, and a second negative electrode material mixture layer (total thickness of the material mixture layers 150 um).

## Example 2

Artificial graphite was used as a first negative electrode active material, the first negative electrode active material, a first conductive agent, and a first binder were mixed in a weight ratio of 95.35:0.5:1.15:3.0 to prepare a composition for forming a first negative electrode material mixture layer, artificial graphite was used as a second negative electrode active material, the second negative electrode active material, a second conductive agent, and a second binder were mixed in a weight ratio of 97.45:0.5:1.15:0.9 to prepare a composition for forming a second negative electrode material mixture layer, one surface of a copper current collector was coated with the composition for forming a first negative electrode material mixture layer and the composition for forming a second negative electrode material mixture layer, dried at 120°C for 1 minute, and then rolled to prepare a negative electrode which was composed of the current collector, a first negative electrode material mixture layer, and a second negative electrode material mixture layer (total thickness of the material mixture layers 150 $\mu$m).

## Example 3

A negative electrode was prepared in the same manner as in Example 1 except that one surface of a copper current collector was coated with the composition for forming a first negative electrode material mixture layer and the composition for forming a second negative electrode material mixture layer, and then dried at 110°C for 1 minute and 30 seconds to prepare the negative electrode.

## Comparative Example 1

Natural graphite was used as a first negative electrode active material, the first negative electrode active material, a first conductive agent, and a first binder were mixed in a weight ratio of 95.35:0.5:1.15:3.0 to prepare a composition for forming a first negative electrode material mixture layer, artificial graphite was used as a second negative electrode active material, the second negative electrode active material, a second conductive agent, and a second binder were mixed in a weight ratio of 97.45:0.5:1.15:0.9 to prepare a composition for forming a second negative electrode material mixture layer, one surface of a copper current collector was coated with the composition for forming a first negative electrode material mixture layer and the composition for forming a second negative electrode material mixture layer, dried at 120°C for 1 minute, and then rolled to prepare a negative electrode which was composed of the current collector, a first negative electrode material mixture layer, and a second negative electrode material mixture layer (total thickness of the material mixture layers 150 um) .

## Comparative Example 2

A negative electrode was prepared in the same manner as in Example 1 except that a weight ratio of the composition for forming a first negative electrode material mixture layer was set at 96.5:0.5:1:2 and a weight ratio of the composition for forming a second negative electrode material mixture layer was set at 97.5:0.5:1.0:1.0.

## Comparative Example 3

A negative electrode was prepared in the same manner as in Example 1 except that one surface of a copper current collector was coated with the composition for forming a first negative electrode material mixture layer and the composition for forming a second negative electrode material mixture layer, and then dried at 120°C for 1 minute to prepare the negative electrode.

**[Experimental Example 1: Shear Strength ($\sigma$) Analysis]**

(1) Shear Strength ($\sigma$) Data Measurement

For each of the negative electrodes prepared according to Examples 1 to 3 and Comparative Examples 1 to 3, forces applied to a blade according to a cutting depth were measured while performing oblique cutting of the negative electrode material mixture layer using a surface and interfacial cutting analysis system (SAICAS, SAICAS-DN, Dipla Wintes, Japan) equipped with the cubic boron nitrate blade, and shear strength ($\sigma$) according to the cutting depth was obtained by Equation 1.

In this case, the oblique cutting was performed in such a manner that, after the blade was positioned parallel to a surface of the electrode material mixture layer until 0.03 N of vertical force was applied, the blade was advanced at a horizontal velocity of 0.5 $\mu$m/s, a vertical velocity of 0.05 pm/s, and a cutting angle of 5.7° in a constant velocity mode.

Then, the shear strength ($\sigma$) data obtained were analyzed by using a fourth-order polynomial regression equation to obtain a regression curve.

The shear strength data and regression curve of each electrode, which were obtained by the above method, are illustrated in graphs of FIGS. 2 to 7.

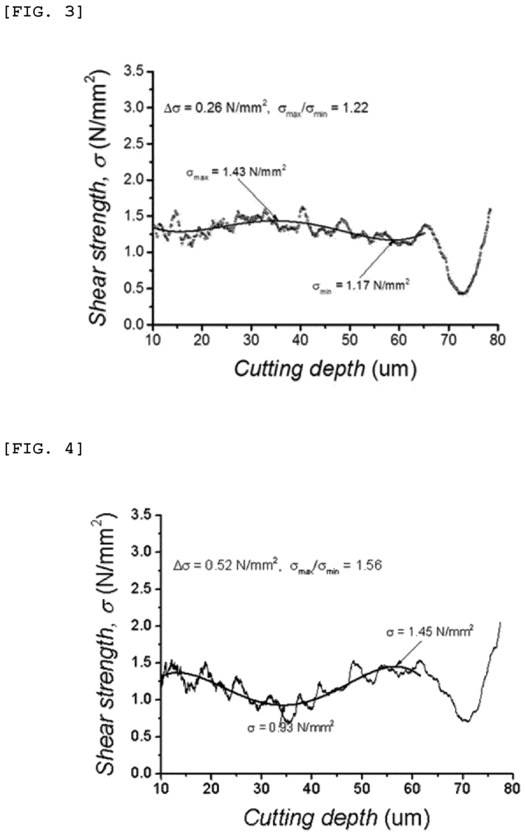

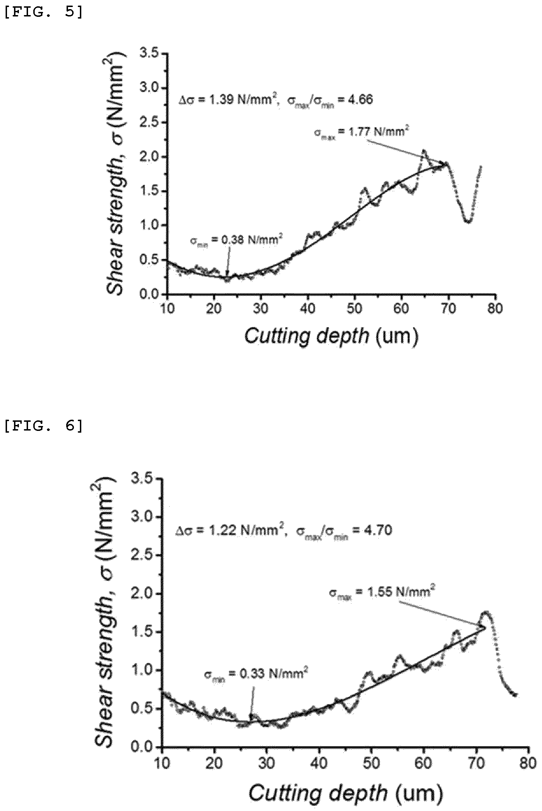

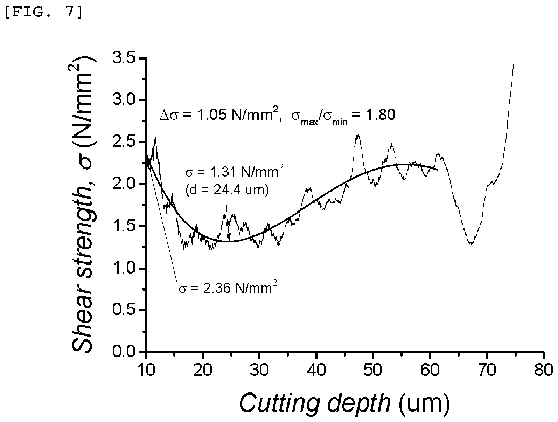

A minimum value ($\sigma_{min}$) and a maximum value ($\sigma_{max}$) of shear strength, and a ratio of the maximum value ($\sigma_{max}$) to the minimum value ($\sigma_{min}$) were obtained from each regression curve illustrated in FIG. 2 (Example 1), FIG. 3 (Example 2), FIG. 4 (Example 3), FIG. 5 (Comparative Example 1), FIG. 6 (Comparative Example 2), and FIG. 7 (Comparative Example 3), and the results thereof are presented in Table 1 below.

[Table 1]

| | Maximum value ($\sigma_{max}$)(N/mm$^2$) | Minimum value ($\sigma_{min}$) (N/mm$^2$) | $\sigma_{max}/\sigma_{min}$ |
|---|---|---|---|
| Example 1 | 1.79 | 1.20 | 1.49 |
| Example 2 | 1.43 | 1.17 | 1.22 |
| Example 3 | 1.45 | 0.93 | 1.56 |
| Comparative Example 1 | 1.77 | 0.38 | 4.66 |
| Comparative Example 2 | 1.55 | 0.33 | 4.70 |
| Comparative Example 3 | 2.36 | 1.31 | 1.80 |

Referring to Table 1, it may be confirmed that, with respect to the negative electrodes of Examples 1 to 3, the ratios of the maximum value ($\sigma_{max}$) to the minimum value ($\sigma_{min}$) satisfied 1.7 or less, but, with respect to the negative electrodes of Comparative Examples 1 to 3, the ratios of the maximum value ($\sigma_{max}$) to the minimum value ($\sigma_{min}$) were greater than 1.7.

**[Experimental Example 2: Life Characteristics Evaluation]**

A LiCoO$_2$ positive electrode active material, a carbon black conductive agent, and a PVdF binder were mixed in an N-methylpyrrolidone solvent at a weight ratio of 96:2:2 to prepare a positive electrode material mixture (viscosity: 5000 mPa·s), and one surface of an aluminum current collector was coated with the positive electrode material mixture, dried at 130°C, and then rolled to prepare a positive electrode.

Each of the negative electrodes prepared in Examples 1 to 3 and Comparative Examples 1 to 3 was used as a negative electrode.

Each lithium secondary battery was prepared by preparing an electrode assembly by disposing a porous polyethylene separator between the positive electrode and negative electrode prepared as described above, disposing the electrode assembly in a case, and then injecting an electrolyte solution into the case. In this case, the electrolyte solution was prepared by dissolving 1.0 M lithium hexafluorophosphate (LiPF$_6$) in an organic solvent composed of ethylene carbonate/ethylmethyl carbonate/diethyl carbonate (mixing volume ratio of EC/EMC/DEC=3/4/3) .

Each of the above-prepared lithium secondary batteries with a battery capacity of 50 mAh was charged at 2.5 V and a constant current of 0.33 C until the voltage became 4.25 V, and was subsequently charged at a constant voltage of 4.25 V, and the charge was terminated when the charge current became 2.5 mA. Thereafter, after being left standing for 30 minutes, each lithium secondary battery was discharged at a constant current of 0.33 C to a voltage of 2.5 V to measure initial capacity. Thereafter, each secondary battery was charged at 2.5 V and a constant current of 1 C at 25°C until the voltage became 4.25 V, and was subsequently charged at a constant voltage of 4.25 V, and the charge was terminated when the charge current became 2.5 mA. Thereafter, after being left standing for 30 minutes, each secondary battery was discharged at a constant current of 1 C to a voltage of 2.5 V to measure capacity retention when 200 cycles of charge and discharge were performed. The results thereof are presented in Table 2.

[Table 2]

|  | Capacity retention(%) (@ 200th cycle) |
|---|---|
| Example 1 | 96.4 |
| Example 2 | 95.0 |
| Example 3 | 92.5 |
| Comparative Example 1 | 82.3 |
| Comparative Example 2 | 84.9 |
| Comparative Example 3 | 89.2 |

Referring to Table 2, it may be confirmed that the secondary batteries respectively using the negative electrodes of Examples 1 to 3, in which the ratio of the maximum value ($\sigma_{max}$) to the minimum value ($\sigma_{min}$) of the shear strength was 1.7 or less, had significantly better life characteristics than the secondary batteries respectively using the negative electrodes of Comparative Examples 1 to 3 in which the ratio of the maximum value ($\sigma_{max}$) to the minimum value ($\sigma_{min}$) of the shear strength was greater than 1.7.

The electrode for a secondary battery according to the present invention may suppress cohesive failure, particularly, interlayer cohesive failure in the electrode material mixture layer during operation of the lithium secondary battery, and may exhibit excellent life characteristics and capacity characteristics while having cost competitiveness.

Particularly, with respect to a multilayer electrode in which artificial graphite having excellent life characteristics and capacity characteristics and natural graphite having excellent strength and adhesion are formed in multi-layers, cohesive failure, particularly, interlayer cohesive failure in the electrode, which occurs due to differences in adhesion and strengths between the artificial graphite and the natural graphite, may be suppressed, and life characteristics may be improved.

**Claims**

1. An electrode for a secondary battery, comprising:

   a current collector; and
   at least oneelectrode material mixture layer present on a surface of the current collector, the at least one electrode material mixture layer comprising a negative electrode active material, a conductive agent, and a binder,
   wherein, the electrode has a property such that in a regression curve obtained by regression analysis of shear strength data according to a cutting depth which are measured whileobliquely cutting the electrode material mixture layer from a surface thereofuntil reaching the current collector using a surface and interfacial cutting analysis system (SAICAS), a ratio of a maximum value ($\sigma_{max}$) to a minimum value ($\sigma_{min}$) of shear strength is 1.7 or less.

2. The electrode for a secondary batteryof claim 1, wherein the ratio of the maximum value ($\sigma_{max}$) to the minimum value ($\sigma_{min}$) of the shear strength in the regression curve is in a range of 1 to 1.6.

3. The electrode for a secondary battery of claim 1, wherein the electrode material mixture layer is obliquely cut at a cutting angle of greater than 0° to 10° or less when the surface and interfacial cutting analysis system (SAICAS) is used.

4. The electrode for a secondary batteryof claim 1,whereina running speed of a blade is in a range of 0.01 $\mu$m/s to 10 um/s in a horizontal direction and 0.001 $\mu$m/s to 1 $\mu$m/s in a vertical directionwhen the surface and interfacial cutting analysis system (SAICAS) is used.

5. The electrode for a secondary batteryof claim 1, wherein the shear strength data according to the cutting depth is calculated by Equation 1:

[Equation 1]

$$\sigma = \frac{F_h \cos\theta \sin\theta - F_v \sin^2\theta}{bt_0}$$

wherein, in Equation 1, $\sigma$ is shear strength ($N/mm^2$), $F_h$ is ahorizontal force (N) applied to a blade which is measured by the surface and interfacial cutting analysis system, $F_v$ is avertical force (N) applied to the blade which is measured by the surface and interfacial cutting analysis system, $\theta$ is acutting angle (°), b is a blade width (mm), and $t_0$ is a cutting depth ($\mu$m).

6. The electrode for a secondary batteryof claim 1, wherein the regression curve is obtained by performing a fourth-order polynomial regression analysis on the shear strength data.

7. The electrode for a secondary batteryof claim 1, whereintheelectrodeis a negative electrode.

8. The electrode for a secondary batteryof claim 1, whereinthe at least one electrode material mixture layer comprises:

a first electrode material mixture layeron the surface of the current collector and comprising a first negative electrode active material, a first conductive agent, and a first binder; and
a second electrode material mixture layer on a surface of the first electrode material mixture layeropposite the current collector and comprising a second negative electrode active material, a second conductive agent, and a second binder.

9. The electrode for a secondary battery of claim 8, wherein the first negative electrode active materialand the second negative electrode active material are different from each other.

10. The electrode for a secondary battery of claim 8, wherein the first negative electrode active materialcomprises natural graphite, and the second negative electrode active material comprises artificial graphite.

11. A lithium secondary battery comprising the electrode for a secondary battery of claim 1.

**Patentansprüche**

1. Elektrode für eine Sekundärbatterie, umfassend:

einen Stromabnehmer; und
mindestens eine Elektrodenmaterialgemischschicht, die auf einer Oberfläche des Stromabnehmers vorhanden ist, wobei die mindestens eine Elektrodenmaterialgemischschicht ein Negativelektrodenaktivmaterial, ein leitfähiges Mittel und ein Bindemittel umfasst,
wobei die Elektrode eine solche Eigenschaft aufweist, dass in einer Regressionskurve, die durch Regressionsanalyse von Scherfestigkeitsdaten gemäß einer Schnitttiefe erhalten wird, die gemessen werden, während die Elektrodenmaterialgemischschicht von einer Oberfläche davon schräg geschnitten wird, bis der Stromabnehmer unter Verwendung eines Oberflächen- und Grenzflächenschnittanalysesystems (SAICAS) erreicht wird, ein Verhältnis eines Maximalwerts ($\sigma_{max}$) zu einem Minimalwert ($\sigma_{min}$) der Scherfestigkeit 1,7 oder weniger beträgt.

2. Elektrode für eine Sekundärbatterie nach Anspruch 1, wobei das Verhältnis des Maximalwerts ($\sigma_{max}$) zu dem Mi-nimalwert ($\sigma_{min}$) der Scherfestigkeit in der Regressionskurve in einem Bereich von 1 bis 1,6 liegt.

3. Elektrode für eine Sekundärbatterie nach Anspruch 1, wobei die Elektrodenmaterialgemischschicht unter einem Schnittwinkel von mehr als 0° bis 10° oder weniger schräg geschnitten wird, wenn das Oberflächen- und Grenzflächenschnittanalysesystem (SAICAS) verwendet wird.

4. Elektrode für eine Sekundärbatterie nach Anspruch 1, wobei eine Laufgeschwindigkeit einer Klinge in einem Bereich

von 0,01 μm/s bis 10 μm/s in einer horizontalen Richtung und 0,001 μm/s bis 1 μm/s in einer vertikalen Richtung liegt, wenn das Oberflächen- und Grenzflächenschnittanalysesystem (SAICAS) verwendet wird.

5. Elektrode für eine Sekundärbatterie nach Anspruch 1, wobei die Scherfestigkeitsdaten gemäß der Schnitttiefe durch Gleichung 1 berechnet werden:

[Gleichung 1]

$$\sigma = \frac{F_h \cos\theta \sin\theta - F_v \sin^2\theta}{bt_0}$$

wobei in Gleichung 1 $\sigma$ die Scherfestigkeit (N/mm$^2$) ist, $F_h$ eine horizontale Kraft (N) ist, die auf eine Klinge ausgeübt wird, die durch das Oberflächen- und Grenzflächenschnittanalysesystem gemessen wird, $F_v$ eine vertikale Kraft (N) ist, die auf die Klinge ausgeübt wird, die durch das Oberflächen- und Grenzflächenschnittanalysesystem gemessen wird, $\theta$ ein Schnittwinkel (°) ist, b eine Klingenbreite (mm) ist und to eine Schnitttiefe (μm) ist.

6. Elektrode für eine Sekundärbatterie nach Anspruch 1, wobei die Regressionskurve durch Durchführen einer Polynomregressionsanalyse vierter Ordnung an den Scherfestigkeitsdaten erhalten wird.

7. Elektrode für eine Sekundärbatterie nach Anspruch 1, wobei die Elektrode eine negative Elektrode ist.

8. Elektrode für eine Sekundärbatterie nach Anspruch 1, wobei die mindestens eine Elektrodenmaterialgemischschicht umfasst:

eine erste Elektrodenmaterialgemischschicht auf der Oberfläche des Stromabnehmers und umfassend ein erstes Negativelektrodenaktivmaterial, ein erstes leitfähiges Mittel und ein erstes Bindemittel; und
eine zweite Elektrodenmaterialgemischschicht auf einer Oberfläche der ersten Elektrodenmaterialgemischschicht gegenüber dem Stromabnehmer und umfassend ein zweites Negativelektrodenaktivmaterial, ein zweites leitfähiges Mittel und ein zweites Bindemittel.

9. Elektrode für eine Sekundärbatterie nach Anspruch 8, wobei sich das erste Negativelektrodenaktivmaterial und das zweite Negativelektrodenaktivmaterial voneinander unterscheiden.

10. Elektrode für eine Sekundärbatterie nach Anspruch 8, wobei das erste Negativelektrodenaktivmaterial natürliches Graphit umfasst und das zweite Negativelektrodenaktivmaterial künstliches Graphit umfasst.

11. Lithiumsekundärbatterie, umfassend die Elektrode für eine Sekundärbatterie nach Anspruch 1.


**Revendications**

1. Électrode pour une batterie secondaire, comprenant :

un collecteur de courant ; et
au moins une couche de mélange de matériau d'électrode présente sur une surface du collecteur de courant,
l'au moins une couche de mélange de matériau d'électrode comprenant un matériau actif d'électrode négative, un agent conducteur, et un liant,
l'électrode étant dotée d'une propriété d'après laquelle, dans une courbe de régression obtenue par une analyse par régression de données de résistance au cisaillement en fonction d'une profondeur de coupe, mesurées au cours d'une coupe oblique de la couche de mélange de matériau d'électrode d'une surface de celle-ci jusqu'à ce que l'on atteigne le collecteur de courant en utilisant un système d'analyse de coupe superficielle et interfaciale (SAICAS), un ratio d'une valeur maximum ($\sigma_{max}$) sur une valeur minimum ($\sigma_{min}$) de la résistance au cisaillement est 1,7 ou moins.

2. Électrode pour une batterie secondaire selon la revendication 1, le ratio de la valeur maximum ($\sigma_{max}$) sur la valeur minimum ($\sigma_{min}$) de la résistance au cisaillement dans la courbe de régression se trouvant dans la plage comprise entre 1 et 1,6.

3. Électrode pour une batterie secondaire selon la revendication 1, la couche de mélange de matériau d'électrode subissant une coupe oblique à un angle de coupe supérieur à un angle de 0° à 10° ou moins en utilisant le système d'analyse de coupe superficielle et interfaciale (SAICAS).

4. Électrode pour une batterie secondaire selon la revendication 1, la vitesse de marche d'une lame étant comprise dans une plage allant de 0,01 $\mu$m/s à 10 $\mu$m/s dans une direction horizontale et de 0,001 $\mu$m/s à 1 $\mu$m/s dans une direction verticale lorsque l'on utilise le système d'analyse de coupe superficielle et interfaciale (SAICAS).

5. Électrode pour une batterie secondaire selon la revendication 1, les données sur la résistance au cisaillement en fonction de la profondeur de coupe étant calculées par l'équation 1 :

[Équation 1]

$$\sigma = \frac{F_h \cos\theta \sin\theta - F_v \sin^2\theta}{b t_0}$$

dans ladite équation $\sigma$ étant la résistance au cisaillement (N/mm$^2$), $F_h$ étant une force horizontale (N) appliquée sur une lame, qui est mesurée par un système d'analyse de coupe superficielle et interfaciale, $F_v$ étant une force verticale (N) appliquée sur la lame, et mesurée par le système d'analyse de coupe superficielle et interfaciale, $\theta$ étant un angle de coupe (°), b étant une largeur de lame (mm), et $t_0$ étant une profondeur de coupe ($\mu$m).

6. Électrode pour une batterie secondaire selon la revendication 1, la courbe de régression s'obtenant en effectuant une analyse de régression polynomiale de quatrième ordre des données sur la résistance au cisaillement.

7. Électrode pour une batterie secondaire selon la revendication 1, l'électrode étant une électrode négative.

8. Électrode pour une batterie secondaire selon la revendication 1, au moins une couche de mélange de matériau d'électrode comprenant :

une première couche de mélange de matériau d'électrode sur la surface du collecteur de courant, et comprenant un premier matériau actif d'électrode négative, un premier agent conducteur, et un premier liant ; et une deuxième couche de mélange de matériau d'électrode sur une surface de la première couche de mélange de matériau d'électrode faisant face au collecteur de courant, et comprenant un deuxième matériau actif d'électrode négative, un deuxième agent conducteur, et un deuxième liant.

9. Électrode pour une batterie secondaire selon la revendication 8, le premier matériau actif d'électrode négative et le deuxième matériau actif d'électrode négative étant différents l'un de l'autre.

10. Électrode pour une batterie secondaire selon la revendication 8, le premier matériau actif d'électrode négative comprenant du graphite naturel, et le deuxième matériau actif d'électrode négative comprenant du graphite artificiel.

11. Batterie secondaire au lithium comprenant l'électrode pour une batterie secondaire selon la revendication 1.

[FIG. 1]

[FIG. 2]

[FIG. 3]

[FIG. 4]

[FIG. 5]

[FIG. 6]

[FIG. 7]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140295248 A

- US 2016163812 A1

**Non-patent literature cited in the description**

- **BONGKI SON et al.** *ACS APPLIED MATERIALS & INTERFACES,* 08 January 2014, vol. 6 (1), 526-531